# EUROPÄISCHE PATENTANMELDUNG

(11) **EP 4 573 987 A1**
(43) Veröffentlichungstag der Anmeldung: **25.06.2025**
(21) Anmeldenummer: 24215422.7
(22) Anmeldetag: 26.11.2024
(51) Int. Cl.: A47J 31/44, F04B 43/00, F04B 43/12

(54) **ROLLENPUMPE FÜR EIN MILCHMODUL EINER GETRÄNKEZUBEREITUNGSVORRICHTUNG, FORMSCHLAUCH ZUR MEDIENFÜHRUNG IN EINER ROLLENPUMPE UND MILCHMODUL FÜR EINE GETRÄNKEZUBEREITUNGSVORRICHTUNG**

(30) Priorität: 22.12.2023 DE 102023136602
(71) Anmelder: Eugster/Frismag AG, 8580 Amriswil (CH)
(72) Erfinder: Frei, Nicolas, 9320 Arbon (CH); Sonderegger, Remo, 8274 Tägerwilen (CH); Stutz, Dieter, 9565 Bussnang (CH)
(74) Vertreter: Patent- und Rechtsanwälte Behrmann Wagner PartG mbB

(57) **Zusammenfassung**

Die Erfindung betrifft eine Rollenpumpe (01) für ein Milchmodul für Getränkezubereitungsvorrichtungen mit einem Gehäuse (02), in dem eine Schlauchführung (12) für einen flexiblen Fluidschlauchs (07), bevorzugt einen Milchschlauchs, ausgebildet ist und einem Rotor (09) mit daran angeordneten Rollen (14) oder Gleitschuhen zur abschnittsweisen, radial inneren Anlage an den Fluidschlauch (07). Erfindungsgemäß ist vorgesehen, dass die Schlauchführung (12) eine, bevorzugt mehrere, besonders bevorzugt zwei, Entlastungsaufweitungen (13) aufweist, die so geformt sind, dass komplementär ausgebildete Sicherungsvorsprünge (14, 15) des Fluidschlauchs (07) in die Entlastungsaufweitungen (13) eingreifen können und im eingesetzten Zustand ein Zug- und/oder Druckentlastung des Fluidschlauchs (07) bewirken.

## Beschreibung

Die vorliegende Erfindung betrifft eine Rollenpumpe für ein Milchmodul einer Getränkezubereitungsvorrichtung nach dem Oberbegriff des Anspruchs 1. Ferner betrifft die Erfindung einen Formschlauch zur Medienführung in einer Rollenpumpe, insbesondere einer Rollenpumpe für ein Milchmodul einer Getränkezubereitungsvorrichtung nach dem Oberbegriff des Anspruchs 8. Außerdem betrifft die Erfindung ein Milchmodul für Getränkezubereitungsvorrichtungen mit einer Rollenpumpe und einem darin eingesetzten Formschlauch gemäß des Anspruchs 11.

Aus dem Stand der Technik sind verschiedene Ausführungsformen von Milchmodulen für Getränkezubereitungsvorrichtungen, insbesondere Kaffee- und/oder Espressomaschinen, bekannt.

Dabei existieren einerseits Ansätze, bei denen die Förderung eines Volumenflusses von Milch sowie die Erwärmung und/oder Aufschäumung der Milch mit ein und derselben Komponente des Milchmoduls erreicht wird oder bereitgestellt wird. Dabei handelt es sich regelmäßig um Milchmodule, deren Milchpumpe im Wesentlichen nach dem Venturi-Prinzip oder dem Prinzip einer Strahlpumpe arbeitet, bei denen ein Wärmeträgerfluid, bevorzugt Wasserdampf und/oder heißes Wasser mit einem entsprechenden Überdruck an einer Eingangsseite einer Venturi-Düse bereitgestellt wird und das strömende Wärmeträgerfluid an einem zweiten Eingang der Düse einen entsprechenden Unterdruck erzeugt, sodass die Milch oder ein Volumenstrom der Milch angesaugt und ausgangsseitig der Düse mit dem Wärmeträgerfluid vermischt wird, wodurch eine Erwärmung und/oder Aufschäumung erreicht wird.

Alternativ dazu existieren im Stand der Technik auch bereits Ansätze, bei denen das Pumpen oder das Bereitstellen des Volumenstroms der Milch auf der einen Seite und das Erwärmen und/oder Aufschäumen der Milch auf der anderen Seite von getrennten Baugruppen oder Komponenten des Milchmoduls bereitgestellt werden. So ist beispielsweise aus der DE 20 2016 006 814 U1 ein Ansatz bekannt, bei dem der Volumenstrom der Milch durch eine Schlauchquetschpumpe, Rollenpumpe oder Peristaltikpumpe bereitgestellt wird und das Erwärmen der Milch mittels eines Mikrowellenstrahlers in einer Mikrowellenkammer bewirkt wird. Auch aus anderen Ansätzen ist die Verwendung von Rollenpumpen, die auch als Peristaltikpumpen, Schlauchpumpen oder Schlauchquetschpumpen bezeichnet werden, für Milchmodule von Getränkezubereitungsvorrichtungen, insbesondere Kaffee- und/oder Espressomaschinen bekannt. In diesem Zusammenhang sei beispielsweise auf die DE 10 2007 024 443 A1, die EP 1 472 963 B1, die EP 2 215 942 A1, die EP 2 570 060 B1 und die EP 2 798 987 B1 verwiesen.

Rollenpumpen haben dabei grundsätzlich den Vorteil, dass das zu fördernde Fluid, insbesondere die zu fördernde Milch, nicht mit der Pumpe als solches in Kontakt kommt, sondern lediglich der in der Rollenpumpe geführte Fluidschlauch mit der Milch in Kontakt kommt. Somit kann leicht eine lebensmittelgerechte und lebensmittelsichere Handhabung der Milch gewährleistet werden. Auch lässt sich die Förderrichtung bei derartigen Pumpen leicht umgekehren, so dass der Fluidschlauch oder Milchschlauch gut entleert werden kann, was der hygienischen Handhabung zuträglich ist.

Nachteilig an der Verwendung von Rollenpumpen oder Schlauchquetschpumpen ist hingegen, die im Betrieb stetige und wiederholte Belastung des Fluidschlauchs durch die elastische Verformung im Rahmen der Kompression und Entspannung zur Erzeugung der Pumpwirkung.

In anderen Einsatzgebieten derartiger Pumpen, wie beispielsweise in der Medizintechnik, in der ohnehin die Fluidschläuche in der ganz überwiegenden Mehrzahl der Fälle als Einwegprodukt verwendet werden, hat dies keine nachteiligen Auswirkungen. Im vorliegenden Einsatzgebiet der Getränkezubereitungsvorrichtungen und deren Milchmodule sollen hingegen die Fluidschläuche möglichst langfristig und dementsprechend wiederholt benutzt werden und nach der jeweiligen Benutzung oder zumindest in regelmäßigen Abständen gereinigt, insbesondere gespült, werden.

Ausgehend von diesem Stand der Technik ist es daher die Aufgabe der vorliegenden Erfindung die Nachteile im Stand der Technik zu überwinden und insbesondere eine Rollenpumpe für Milchmodule von Getränkezubereitungsvorrichtungen vorzuschlagen, die die Lebensdauer der Fluidschläuche erhöht oder den Verschleiß der Fluidschläuche verringert und darüber hinaus sowohl während des Betriebs mit einem Fluidschlauch als auch bei einem doch notwendig werdenden Wechsel eines Fluidschlauchs den Ein- und Ausbau zu erleichtern und zu verbessern.

Diese Aufgabe wird im Hinblick auf eine Rollenpumpe mit den Merkmalen des Anspruchs 1 gelöst.

In Hinsicht auf einen Formschlauch als flexiblen Fluidschlauch für eine Rollenpumpe wird die Aufgabe mit den Merkmalen des unabhängigen Anspruchs 8 gelöst.

Bezogen auf ein Milchmodul für eine Getränkezubereitungsvorrichtung wird die Aufgabe mit den Merkmalen des Anspruchs 11 gelöst.

Vorteilhafte Ausführungsformen sind Gegenstand der nachfolgenden Beschreibung, der Figurenbeschreibung sowie der Figuren und der Unteransprüche.

Grundsätzlich sollen nachfolgend vorrichtungsmäßig beschriebene Merkmale auch als entsprechend verfahrensmäßig offenbart und beanspruchbar gelten und umgekehrt.

Die erfindungsgemäße Rollenpumpe für ein Milchmodul für Getränkezubereitungsvorrichtungen insbesondere Kaffee- und/oder Espressomaschinen, umfasst ein Gehäuse, in dem eine Schlauchführung für einen flexiblen Fluidschlauch, bevorzugt einen Milchschlauch, ausgebildet ist, wobei in dem Gehäuse ferner ein Rotor mit daran angeordneten Rollen oder Gleitschuhen angeordnet ist, welcher zur abschnittsweisen, radial inneren Anlage an dem Fluidschlauch dient und dessen Bewegung im Zusammenwirken mit der Schlauchführung in Rotationsrichtung zu einem Verengen, Abschnüren und anschließenden Aufweiten des Querschnitts des Fluidschlauchs führt, sodass ein Volumenstrom des zu fördernden Fluids, insbesondere der Milch in Rotationsrichtung des Rotors transportiert oder gepumpt wird.

Erfindungsgemäß ist dabei vorgesehen, dass die Schlauchführung eine, bevorzugt mehrere, besonders bevorzugt zwei, Entlastungsaufweitungen aufweist, die so geformt sind, dass komplementär ausgebildete Sicherungsvorsprünge des Fluidschlauchs in die Entlastungsaufweitungen eingreifen können und im eingesetzten Zustand eine Zug- und/oder Druckentlastung des Fluidschlauchs bewirken.

Die vorliegende Erfindung basiert damit auf dem Grundgedanken, die auf den Fluidschlauch wirkenden Kräfte, insbesondere Zug- und Druckkräfte, während der Pumpenoperation oder während dem Betrieb der Pumpe besser aufzunehmen und in das Pumpengehäuse abzuleiten, um somit insgesamt die Belastung und Beanspruchung des Fluidschlauchs zu verringern und damit die Langlebigkeit zu steigern oder den Verschleiß zu minimieren.

In diesem Zusammenhang hat die Erfindung erkannt, dass es besonders vorteilhaft möglich ist über die, bevorzugt formschlüssige, Ausbildung von Entlastungsaufweitungen im Gehäuse der Rollenpumpe mit komplementär ausgebildeten Vorsprüngen oder Sicherungsvorsprüngen des Fluidschlauchs ein Großteil der auf den Fluidschlauch wirkenden Kräfte in das Gehäuse einzuleiten und somit insgesamt den Fluidschlauch zu entlasten oder zumindest die auftretenden Kräfte sehr lokal zu begrenzen, sodass auch die verschleißfördernden Mechanismen nur sehr lokal oder räumlich begrenzt in Erscheinung treten können.

Die Rollenpumpe kann nach einem grundsätzlich bekannten Prinzip aufgebaut sein. Beispielsweise kann die Schlauchführung eine bekannte Kompensation aufweisen, um das Pulsieren des geförderten Volumenstroms zu verhindern oder zu minimieren. Der Fluidschlauch, bevorzugt der Milchschlauch, kann aus grundsätzlich bekannten, lebensmittelverträglichen oder lebensmittelkonformen Kunststoffmaterialien gefertigt sein. Der Fluidschlauch ist dabei entsprechend flexibel, um sowohl die Verformung durch das Anpressen der Rollen oder Gleitschuhe als auch das grundsätzliche Annehmen der Form der Schlauchführung innerhalb des Gehäuses der Rollenpumpe zu ermöglichen.

Die Entlastungsaufweitungen können beispielsweise als Nut oder als Nuten ausgebildet sein. Bevorzugt sind die Entlastungsaufweitungen so symmetrisch, beispielsweise gegenüberliegend und/oder radial umlaufend ausgebildet, dass eine gleichmäßige Entlastung von Druck und Zugkräften des Fluidschlauchs bewirkt wird. Besonders bevorzugt erstrecken sich diese senkrecht zur Rotationsachse des Rotors.

Gemäß einer ersten vorteilhaften Ausgestaltung der Rollenpumpe kann vorgesehen sein, dass die Entlastungsaufweitungen als zusätzlich zu gehäuseeingangs- und/oder gehäuseausgangsseitigen Aufweitungen der Schlauchführung ausgebildet sind. Es kann beispielsweise sinnvoll sein, gehäuseeingangsseitig und/oder gehäuseausgangsseitig Aufweitungen in der Schlauchführung der Rollenpumpe vorzusehen, um eventuell Kupplungsstücke vorzugsehen, um zu Kupplungszwecken veränderte Geometrien des Fluidschlauchs oder Milchschlauchs aufnehmen zu können. Diese Aufweitungen sind aber, insbesondere wenn sie mit vom Fluidschlauch separat ausgebildeten Bauteilen zusammenwirken, wie beispielsweise über eine Steckverbindung verbundene Anschlussstücke oder Konnektoren aufnehmen, nicht geeignet, um Druck- und/oder Zugkräfte aufzunehmen und abzuleiten.

Dementsprechend ist es besonders vorteilhaft, wenn zusätzlich zu solchen Aufweitungen, die im Wesentlichen zur Erleichterung oder Verbesserung der Verbindbarkeit der Rollenpumpe und des darin geführten Fluidschlauchs mit sonstigen Vorrichtungskomponenten des Milchmoduls und/oder einer Getränkezubereitungsvorrichtung dienen, das Gehäuse der Rollenpumpe zusätzlich entsprechende Entlastungsaufweitungen aufweist. Diese sind dann besonders bevorzugt jeweils zwischen der eingangsseitigen und/oder ausgangsseitigen Aufweitung der Schlauchführung und dem Teil der Schlauchführung ausgebildet, welcher bei Rotation des Rotors mit den Gleitschuhen oder Rollen gegenüberliegend ausgebildet ist. Die gehäuseeingangs- und/oder gehäuseausgangsseitigen Aufweitungen können als Verbindungsmittel genutzt werden und die Anzahl an Schnittstellen im Fluidsystem der Rollenpumpe minimeren und sind daher ebenfalls besonders vorteilhaft, da bei einer geringen Anzahl an Schnittstellen auch die Monatge der Rollenpumpe und deren Integration in andere Vorrichtungen, wie beispielsweise eine Getränkezubereitungsvorrichtung erleichtert wird.

In einer weiteren, besonders wünschenswerten Ausgestaltung der Rollenpumpe kann vorgesehen sein, dass die Entlastungsaufweitungen eine Kontur zur Aufnahme und/oder Ausbildung einer Wirbelkammer zum Aufschäumen und/oder Erwärmen des gepumpten Fluids, bevorzugt der Milch, umfassen oder ausbilden.

Wie einleitend bereits ausgeführt, ist bei der Verwendung einer Rollenpumpe für ein Milchmodul einer Getränkezubereitungsvorrichtung in der Regel ein weiteres Element oder eine weitere Vorrichtungskomponente nötig, die den mit der Rollenpumpe erzeugten Volumenstrom der Milch erwärmt. Dies kann beispielsweise über eine Wirbelkammer erfolgen, die in ein Wärmeträgerfluid, beispielsweise Wasserdampf und/oder heißes Wasser eingeleitet und in der Wirbelkammer mit dem Volumenstrom der Milch vermischt wird. Besonders vorteilhaft kann dementsprechend vorgesehen sein, dass die Wirbelkammer in die Rollenpumpe und in das Gehäuse der Rollenpumpe integriert wird und dabei die Entlastungsaufweitungen im Gehäuse der Rollenpumpe nicht nur dazu dienen die Entlastung des Fluidschlauchs zu ermöglichen, sondern gleichzeitig die Aufnahme einer solchen Wirbelkammer oder sogar die teilweise Ausbildung oder Begrenzung einer solchen Wirbelkammer zum Aufschäumen und/oder Erwärmen des Fluids bereitstellen. Dadurch kann einerseits die Erwärmung und/oder Aufschäumung zumindest räumlich in die Rollenpumpe integriert werden und gleichzeitig die Entlastung des Fluidschlauchs bezüglich entstehender Druck- und/oder Zugkräfte verbessert werden.

Weiterhin kann vorteilhaft vorgesehen sein, dass die Schlauchführung und/oder Rotor mit einer Toleranzausgleichseinrichtung zusammenwirkend ausgebildet ist/sind, so dass fertigungsbedingte Toleranzen keine oder nur eine verminderte Auswirkung auf die Pumpenfunktionalität und die Pumpencharakteristik ausüben und/oder im Rahmen der Summe aller Fertigungstoleranzen von Rollenpumpe und/oder Fluidschlauch konstant sind. Damit wird erreicht, dass eine Ansteuerung der Rollenpumpe, beispielsweise durch eine zentrale Steuereinrichtung, bevorzugt über geeignete Steuerparameter, zu Pumpenleistungen, wie beispielsweise Volumenraten führen, die gerade nicht davon abhängen, wie sich einzelne fertigungsbedingte Toleranzen im Ergebnis aufsummieren oder ausmittel. Dadurch kann vorteilhaft erreicht werden, dass die jeweilige Rollenpumpe nicht nachträglich genormt werden muss, um eine gewollte Pumpencharakteristik zu gewährleisten, sondern dass der Toleranzausgleich bereits pumpenseitig hergestellt wird.

In einer weiteren, besonders vorteilhaften Ausgestaltung der Rollenpumpe kann vorgesehen sein, dass in dem Gehäuse ein linear entlang einer Ausgleichsrichtung beweglicher Schlitten ausgebildet ist, der wenigstens ein Teil des radial äußeren Abschnitts der Schlauchführung im Bereich des Rotors ausbildet, wobei der Schlitten entlang der Ausgleichsrichtung mittels elastischer Vorspannmittel auf den Rotor zu vorgespannt ausgebildet ist. Der Schlitten kann vorteilhaft als Toleranzausgleichseinrichtung wirken.

Um den Fluidschlauch oder Milchschlauch möglichst langfristig und ohne zu starken Verschleiß betreiben zu können, ist es besonders wichtig, wenn der Fluidschlauch und die Rollenpumpe möglichst optimal aufeinander abgestimmt sind. Sowohl die einzelnen Komponenten der Rollenpumpe als auch der Fluidschlauch als solches unterliegen jedoch nicht vermeidbaren fertigungsbedingten Toleranzen. Um ein dementsprechenden Ausgleich zu schaffen, kann es besonders vorteilhaft sein, wenn der Teil der Schlauchführung, der den Rollen oder Gleitschuhen des Rotors gegenüberliegend ausgebildet ist so verstellbar und insbesondere selbst justierend ist, dass Fertigungstoleranzen ausgeglichen oder kompensiert werden.

In besonders vorteilhafterweise wird dadurch auch erreicht, dass die Pumpencharakteristik von unterschiedlichen Pumpen nicht durch Fertigungstoleranzen beeinflusst oder verändert werden, sondern dass unterschiedliche Pumpen identische oder zumindest hochgradig ähnliche Pumpeigenschaften, beispielsweise bei einer vorgegebenen Bewegung des Rotors über eine Bestromung eines Antriebsmotors aufweisen. Dieser Ausgleich kann besonders vorteilhaft erreicht werden, wenn in dem Gehäuse ein linear entlang einer Ausgleichsrichtung beweglicher Schlitten ausgebildet ist, der ein Teil der radial äußeren Schlauchführung ausbildet und der zudem in Richtung des Rotors über Vorspannmittel vorgespannt ist. Wie im weiteren Verlauf der Beschreibung noch im Detail angegeben werden wird, hat ein solcher Schlitten auch den Vorteil, dass eine Entnahme und/oder ein Wechsel des Fluidschlauchs besonders einfach und vorteilhaft ermöglicht wird.

In einer weiteren, besonders wünschenswerten Ausgestaltung der Rollenpumpe kann zudem vorgesehen sein, dass im Gehäuse ein Anschlag ausgebildet ist, der die Linearbewegung des beweglich gelagerten Schlittens entgegen der Vorspannung der elastischen Vorspannmittel limitiert und/oder einen Mindestabstand im Bereich der Schlauchführung definiert.

Dadurch wird sichergestellt, dass der Schlitten zwar einerseits die fertigungsbedingten Toleranzen ausgleicht und dadurch den Fluidschlauch vor übermäßigem Verschleiß schützt und die Pumpencharakteristik der Rollenpumpe vereinheitlicht, dass jedoch gleichzeitig kein zu großer dauerhafter Druck und eine daraus resultierende Verformung auf den Fluidschlauch einwirkt, die ihrerseits wiederum zu Ermüdungs- oder Verschleißerscheinungen führen könnte. Der Mindestabstand wird im Wesentlichen zwischen dem Rotor und der Schlauchführung ausgebildet.

Weiterhin kann in einer vorteilhaften Ausgestaltung vorgesehen sein, dass die Rollenpumpe ein Betätigungsmechanismus, bevorzugt einen Schieber- oder Hebelmechanismus, umfasst, mit dem der Schlitten entgegen der Vorspannung in Ausgleichsrichtung bewegbar, und bevorzugt arretierbar, ist.

Wie oben bereits angedeutet, kann der beweglich gelagerte und vorgespannte Schlitten bei einer Bewegung entgegen der Vorspannungsrichtung oder Ausgleichsrichtung wenigstens abschnittsweise den Abstand zwischen der radial äußeren Schlauchführung und den Rotor der Rollenpumpe mit samt den Rollen oder Gleitschuhen vergrößern, was wiederum zur Freigabe des Fluidschlauchs führt und dementsprechend eine Entnahme des Fluidschlauchs ermöglicht und erleichtert. Besonders vorteilhaft kann die besagte Bewegung des Schlittens entgegen der Ausgleichsrichtung und entgegen der Vorspannung der Vorspannmittel über einen Betätigungsmechanismus, bevorzugt einen Schiebermechanismus oder Hebelmechanismus, bereitgestellt werden. Besonders vorteilhaft kann dabei vorgesehen sein, dass der Betätigungsmechanismus eine Arretierung in einem Freigabezustand des Schlittens erlaubt, sodass der Fluidschlauch sicher und einfach entnommen und wieder eingebracht werden kann, ohne dass die Vorspannmittel den Schlitten ungewollt oder unbeabsichtigt wieder auf den Rotor zu beschleunigen. Auch muss dann während des Wechsels oder Aus- und Wiedereinbau des Fluidschlauchs der Betätigungsmechanismus nicht dauerhaft aktiviert gehalten werden, sondern kann nach erfolgtem Wiedereinbau aus der Arretierung gelöst werden.

In einer ebenfalls vorteilhaften Variante der Rollenpumpe kann vorgesehen sein, dass ein Deckel des Gehäuses so ausgebildet ist, dass dieser in Abhängigkeit des Zustands des Betätigungsmechanismus in einen Sicherungszustand und einen Freigabezustand überführbar ist. Dadurch wird erreicht, dass sowohl die Entnehmbarkeit des Deckels sowie alternativ die Sicherung des Deckels und die Bewegung des Schlittens entgegen der Vorspannung zur Freigabe des Fluidschlauchs über ein und denselben Betätigungsmechanismus hergestellt werden können. Mit anderen Worten ausgedrückt bedeutet dies, dass ein Benutzer, der den Betätigungsmechanismus bedient und besonders bevorzugt dadurch den beweglichen Schlitten in eine entgegen der Vorspannung der Vorspannmittel zurückgezogenen Position arretiert, gleichzeitig auch den Deckel des Gehäuses oder einen Teil eines Gehäusedeckels freigibt. Umgekehrt kann vorgesehen sein, dass wenn der Betätigungsmechanismus dazu führt, dass der Schlitten über die Vorspannmittel den Fluidschlauch zwischen Rotor und radial äußerer Schlauchführung sichert/klemmt der Deckel des Gehäuses der Rollenpumpe entsprechend gesichert wird/ist.

Das oben genannte Problem wird ebenfalls durch einen Formschlauch als Fluidschlauch zur Medienführung in einer Rollenpumpe, insbesondere einer Rollenpumpe nach einer der vorausgehend beschriebenen Ausführungsform gelöst, wobei der Formschlauch aus flexiblem Material gefertigt ist und ein Leitungsvolumen umschließt und erfindungsgemäß zudem vorgesehen ist, dass der Formschlauch auf einer Außenoberfläche Sicherungsvorsprünge aufweist, die in komplementär ausgebildete Entlastungsaufweitungen des Gehäuses der Rollenpumpe eingreifen können und im eingesetzten Zustand eine Zug- und/oder Druckentlastung des als Fluidschlauch wirkenden Formschlauchs bewirken.

Ein solcher erfindungsgemäßer Formschlauch kann beispielsweise über entsprechende Gussverfahren aus mehreren Einzelteilen oder als einziges, monolithisches Bauteil hergestellt werden. Besonders bevorzugt sind die Sicherungsvorsprünge stoffschlüssig mit dem sonstigen Formschlauch oder Fluidschlauch ausgebildet, um sicherzustellen, dass eine möglichst gute Krafteinleitung aus dem Formschlauch über dessen Sicherungsvorsprünge in das Gehäuse der Rollenpumpe ermöglicht wird.

In diesem Zusammenhang kann besonders vorteilhaft vorgesehen sein, dass die Sicherungsvorsprünge einstückig mit dem Formschlauch ausgebildet sind. Dies kann beispielsweise auch dadurch erreicht werden, dass die Sicherungsvorsprünge nachträglich an einen bestehenden Schlauch in grundsätzlich bekannten Spritzgussverfahren angespritzt werden, bei denen eine stoffschlüssige Verbindung zwischen den Sicherungsvorsprüngen und dem sonstigen Formschlauch erreicht wird.

In einer weiteren, besonders vorteilhaften Ausgestaltung des Formschlauchs kann vorgesehen sein, dass dieser Mittel aufweist, die eine Wirbelkammer zum Erwärmen des im Formschlauch geführten Fluids, bevorzugt Milch, ausbilden oder im eingesetzten Zustand zusammen mit Mitteln der Rollenpumpe, insbesondere des Gehäuses der Rollenpumpe, eine Wirbelkammer ausbilden. Durch die Integration der Mittel zum Ausbilden einer eine Wirbelkammer kann in besonderer Weise eine weitere Funktionalität in den Formschlauch integriert werden. Somit kann der Formschlauch dann neben der reinen Fluidführung und der verbesserten Kraftaufnahme und Krafteinleitung innerhalb der Pumpe auch noch eine effektive Erwärmung ermöglichen oder unterstützen.

Wie oben bereits beschrieben verbessert dies die Einleitung der Such- und Druckkräfte in das Gehäuse der Rollenpumpe und sorgt gleichzeitig für eine räumliche Integration einer Aufschäum- und/oder Erwärmungswirkung in die ansonsten lediglich dem Volumenstrom bereitstellenden Milchpumpe in Form einer Rollenpumpe.

Die oben genannte Aufgabe wird auch durch ein Milchmodul für Getränkezubereitungsvorrichtungen, insbesondere für Kaffee- und/oder Espressomaschinen, gelöst, welche eine Rollenpumpe gemäß einer der vorangehend beschriebenen Ausführungsformen und einen darin eingesetzten Formschlauch nach einer der vorangehend beschrieben Ausführungsformen aufweist.

Durch das erfindungsgemäße Milchmodul kann zumindest der Verschleiß der Fluidschläuche oder Formschläuche deutlich reduziert und dadurch die Langlebigkeit der Fluidschläuche oder Formschläuche deutlich verbessert werden. Gleichzeitig können die Vorteile einer Rollenpumpe genutzt werden. Je nach Ausführungsform kann auch die Aufschäumung und/oder Erwärmung der Milch mittels einer teilweise in den Formschlauch und das Pumpengehäuse ausgebildeten Wirbelkammer in die Rollenpumpe oder zumindest deren Gehäuse integriert werden.

Vorteilhafte Ausführungsformen der vorliegenden Erfindung werden nachfolgend beispielhaft anhand der lediglich schematischen Zeichnungen erörtert werden.

Darin zeigen:
- Fig. 1:: eine perspektivische Darstellung einer erfindungsgemäßen Rollenpumpe;
- Fig. 2:: eine perspektivische Darstellung einer erfindungsgemäßen Rollenpumpe gemäß Fig. 1 mit abgenommenem Deckel;
- Fig. 3:: eine perspektivische Schnittdarstellung durch eine erfindungsgemäße Rollenpumpe mit eingesetztem Formschlauch;
- Fig. 4:: eine Draufsicht auf eine erfindungsgemäße Rollenpumpe;
- Fig. 5:: eine Perspektivdarstellung eines erfindungsgemäßen Formschlauchs.

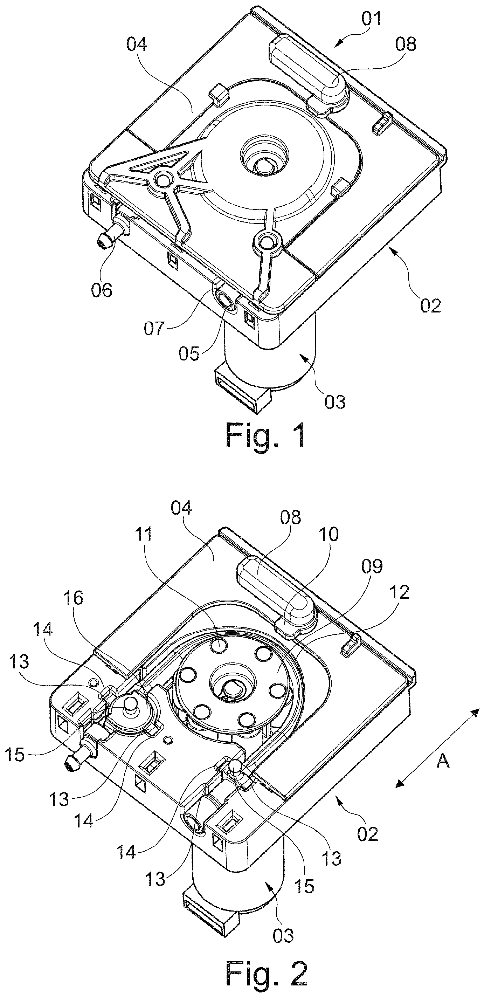

Fig. 1 zeigt eine perspektivische Ansicht einer erfindungsgemäßen Rollenpumpe 01. Zu erkennen ist ein Gehäuse 02, ein bodenseitig an dem Gehäuse 02 angeordneter Getriebemotor 03, ein Deckel 04 des Gehäuses 02, Eintritts- und Austrittsanschlüsse 05, 06 eines Fluidschlauchs 07 sowie ein auf dem zweiteiligen Deckel 04 angeordneter Betätigungsmechanismus 08.

In der Darstellung der Fig. 2 ist ein Deckel 04 entfernt worden, bevorzugt dadurch, dass der Betätigungsmechanismus 08 in Richtung einer Ausgleichsrichtung A von dem Rotor 09 wegbewegt wurde und damit ein Überstand 10 des Betätigungsmechanismus 08 den entfernten Teil des Deckels 04 freigegeben hat. In der Ansicht mit dem teilweise entfernten Deckel 04 ist zu erkennen, dass im Gehäuse 02 der Rollenpumpe 01 ein Rotor 09 angeordnet ist, der eine Vielzahl von Rollen 11 antreibt. Alternativ zu den Rollen 11 können Gleitschuhe oder dergleichen zum Einsatz kommen. Das Gehäuse 02 bildet zudem eine Schlauchführung 12 aus. In der Schlauchführung 12 ist der Fluidschlauch 07 eingesetzt. In einem Teil der Schlauchführung 12 wird radial innenliegend der Fluidschlauch durch die Rollen 11 des Rotors 09 kontaktiert. Beim Antreiben des Rotors 09 sorgen die Rollen 11 im Zusammenspiel oder Zusammenwirken mit der Schlauchführung für ein Verändern des Querschnitts des Fluidschlauches 07 bis hin zur Abschnürung des Querschnitts. Bei einer weiteren Rotation des Rotors 09 wird der Querschnitt des Fluidschlauchs wieder vergrößert. Dadurch entsteht ein Volumenfluss und eine Pumpwirkung.

Das Gehäuse 02 der Rollenpumpe 01 umfasst sowohl eingangsseitig als auch ausgangsseitig Entlastungsaufweitungen 13, in die Sicherungsvorsprünge 14 des Fluidschlauchs 07 eingreifen. Die Entlastungsaufweitungen 13 und die Sicherungsvorsprünge 14 sind jeweils zwischen dem Eingang oder Ausgang der Rollenpumpe 01 und dem Bereich der Schlauchführung 12 angeordnet, in der eine Anlage der Rollen 11 mit dem Fluidschlauch 07 gegeben ist. Über das Zusammenwirken der Entlastungsaufweitungen 13 und der Sicherungsvorsprünge 14 können Druck- und/oder Zugkräfte auf den Fluidschlauch 07 besonders bevorzugt in die Rollenpumpe 01 und das Gehäuse 02 eingeleitet werden. Dadurch wird der Verschleiß des Fluidschlauchs 07 verringert.

Der Fluidschlauch 07 weist zudem obenliegende Sicherungsvorsprünge 15 auf, die mit dem entnommenen Teil des Deckels 04 des Gehäuses 02 in Eingriff oder in Wirkverbindung stehen, wenn der entsprechende Deckelteil aufgesetzt und gesichert ist.

Zudem ist in der Fig. 2 bereits erkennbar, dass der Fluidschlauch 07 Mittel umfasst, die eine Wirbelkammer 16 ausbilden oder zusammen mit entsprechenden Gegenkomponenten aufseiten des Gehäuses 02 der Rollenpumpe 01 eine Wirbelkammer 16 ausbilden. Die Wirbelkammer 16 kann dazu genutzt werden, um Milch vor dem Austritt aus der Rollenpumpe 01 zu erwärmen und/oder aufzuschäumen. Dazu kann ein Wärmeträgerfluid, beispielsweise über eine zentrale, innenliegende Kammer, die mit einer dazugehörigen Zuleitung verbunden ist und eine Innenwand der Wirbelkammer, in die Wirbelkammer eingeleitet werden.

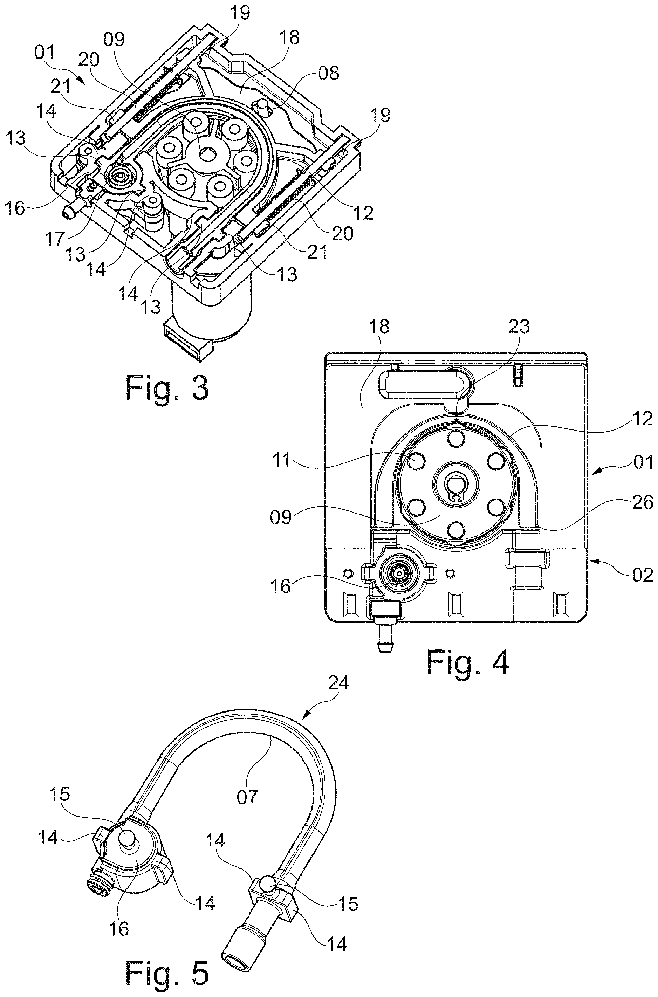

In der Schnittdarstellung der Fig. 3 ist bezüglich der Wirbelkammer 16 dargestellt, dass diese über eine solche innenliegende Kammer 17 verfügt, über die ein Wärmeträgerfluid, beispielsweise Wasserdampf und/oder heißes Wasser, in die Wirbelkammer eingebracht werden kann.

Neben den Sicherungsvorsprüngen 14 und den dazugehörigen Entlastungsaufweitungen 13 im Gehäuse 02 der Rollenpumpe 01 ist in der Schnittdarstellung der Fig. 3 auch erkennbar, dass im Gehäuse 02 der Rollenpumpe 01 ein beweglich gelagerter Schlitten 18 angeordnet ist. Der Schlitten 18 ist auf Führungsmitteln, die in der Ausführungsform der Fig. 3 als Gleitstangen 19 ausgebildet sind, beweglich gelagert. Zudem sind auf den Gleitstangen 19 zwei Wendelfedern 20 als elastisch verformbare Vorspannmittel angeordnet, die sich auf einer Seite an Vorsprüngen 21 der Gleitstangen und andererseits an Führungsbuchsen 22 des Schlittens 18 abstützen und somit den Schlitten 18 in Ausgleichsrichtung A auf den Rotor 09 zu kraftbeaufschlagen.

Dadurch kann bei einem eingesetzten Fluidschlauch 07 eine Kompensation für etwaige fertigungsbedingte Toleranzen der beteiligten Bauteile erreicht werden. Gleichzeitig ermöglicht der Schlitten in Kombination mit dem Betätigungsmechanismus 08 eine einfache Entnahme und Wiedereinführung des Fluidschlauchs 07. Denn wird über den Betätigungsmechanismus 08 der bewegliche Schlitten 18 in Ausgleichsrichtung A vom Rotor 09 wegbewegt, wird der Abstand zwischen Rotor 09 und radial äußerer Seite der Schlauchführung 12 vergrößert und somit die Entnahme und das Einsetzen des Fluidschlauchs 07 erleichtert. Besonders vorteilhaft kann vorgesehen sein, dass über den Betätigungsmechanismus 08 in einer zurückgezogenen Stellung des Schlittens 18 eine Arretierung des Schlittens bewerkstelligt werden kann. Die Vorspannmittel müssen dabei so viel Kraft/Druck ausüben, dass die Pumpenwirkung nicht oder nicht merklich beeinträchtigt wird. Denn sonst würde durch die Rollen keine ausreichende Verformung des Fluidschlauchs 07 mehr gewährleistet werden, der aber für das grundlegende Pumpprinzip notwendig ist.

In der Draufsicht der Fig. 4 ist nochmals der bewegliche Schlitten dargestellt. In der Darstellung der Fig. 4 ist zu erkennen, dass am Übergang 26 vom Schlitten 18 zum sonstigen Gehäuse 02 der Rollenpumpe 01 ein Anschlag realisiert ist, der in dem Bereich der Schlauchführung 12, die den Rollen 11 des Rotors 09 gegenüberliegend angeordnet ist, ein Mindestabstand 23 definiert. Über den Mindestabstand 23 wird sichergestellt, dass der in der Fig. 4 nicht dargestellte und dementsprechend nicht eingesetzte Fluidschlauch 07 während des Betriebs der Rollenpumpe 01 als auch im Stillstand der Rollenpumpe 01 nicht zu stark kraftbeaufschlagt und nicht zu stark dauerhaft verformt wird. Dadurch wird sichergestellt, dass es nicht zu einer frühzeitigen oder zu starken Abnutzung des Fluidschlauchs 07 oder zu sonstigen Verschleißerscheinungen kommt.

In der Darstellung der Fig. 4 ist auch erkennbar, dass das Gehäuse 02 Teile der Wirbelkammer 16 bereitstellt oder ausbildet, wobei die Wirbelkammer 16 erst dadurch final gebildet wird, dass der Fluidschlauch 07 eingesetzt wird.

In der Darstellung der Fig. 5 ist nochmals der als Formschlauch 24 ausgebildete Fluidschlauch 07 dargestellt. Der Formschlauch 24 ist aus flexiblem Material gefertigt und umschließt ein Leitungsvolumen. Auf einer Außenoberfläche 25 umfasst der Formschlauch die Sicherungsvorsprünge 14, die im eingesetzten Zustand mit den Entlastungsaufweitungen 13 des Gehäuses 02 der Rollenpumpe 01 zusammenwirken. Weiterhin umfasst der Formschlauch 24 die obenliegenden Sicherungsvorsprünge 15 und Mittel zur Ausbildung der Wirbelkammer 16.

### Bezugszeichen

- 01: Rollenpumpe
- 02: Gehäuse
- 03: Getriebemotor
- 04: Deckel
- 05: Eintrittsanschluss
- 06: Austrittsanschluss
- 07: Fluidschlauch
- 08: Betätigungsmechanismus
- 09: Rotor
- 10: Überstand
- 11: Rollen
- 12: Schlauchführung
- 13: Entlastungsaufweitungen
- 14: Sicherungsvorsprünge
- 15: obenliegender Sicherungsvorsprung
- 16: Wirbelkammer
- 17: Kammer
- 18: Schlitten
- 19: Gleitstangen
- 20: Wendelfeder
- 21: Vorsprung
- 22: Führungsbuchsen
- 23: Mindestabstand
- 24: Formschlauch
- 25: Außenoberfläche
- 26: Übergang

- A: Ausgleichsrichtung

## Patentansprüche

1. Rollenpumpe (01) für ein Milchmodul für Getränkezubereitungsvorrichtungen mit einem Gehäuse (02), in dem eine Schlauchführung (12) für einen flexiblen Fluidschlauchs (07), bevorzugt einen Milchschlauchs, ausgebildet ist und einem Rotor (09) mit daran angeordneten Rollen (14) oder Gleitschuhen zur abschnittsweisen, radial inneren Anlage an den Fluidschlauch (07)
**dadurch gekennzeichnet,**
**dass** die Schlauchführung (12) eine, bevorzugt mehrere, besonders bevorzugt zwei, Entlastungsaufweitungen (13) aufweist, die so geformt sind, dass komplementär ausgebildete Sicherungsvorsprünge (14, 15) des Fluidschlauchs (07) in die Entlastungsaufweitungen (13) eingreifen können und im eingesetzten Zustand ein Zug- und/oder Druckentlastung des Fluidschlauchs (07) bewirken.

2. Rollenpumpe nach Anspruch 1,
**dadurch gekennzeichnet,**
**dass** die Entlastungsaufweitungen (13) zusätzlich zu gehäuseeingangs- und/oder gehäuseausgangsseitigen Aufweitungen ausgebildet sind.

3. Rollenpumpe nach Anspruch 1 oder 2,
**dadurch gekennzeichnet,**
**dass** die Entlastungsaufweitungen (13) eine Kontur zur Aufnahme und/oder Ausbildung einer Wirbelkammer (16) zum Aufschäumen und/oder Erwärmen des gepumpten Fluids, bevorzugt der Milch, umfassen.

4. Rollenpumpe nach einem der vorangehenden Ansprüche,
**dadurch gekennzeichnet,**
**dass** die Schlauchführung (12) und/oder Rotor (09) mit einer Toleranzausgleichseinrichtung zusammenwirkend ausgebildet ist/sind, so dass fertigungsbedingte Toleranzen keine oder nur eine verminderte Auswirkung auf die Pumpenfunktionalität und die Pumpencharakteristik ausüben und/oder im Rahmen der Summe aller Fertigungstoleranzen von Rollenpumpe (01) und/oder Fluidschlauch (07) konstant sind.

5. Rollenpumpe nach einem der vorangehenden Ansprüche,
**dadurch gekennzeichnet,**
**dass** in dem Gehäuse (02) ein linear entlang einer Ausgleichsrichtung beweglicher Schlitten (18) ausgebildet ist, der wenigstens einen Teil des radial äußeren Abschnitts der Schlauchführung (12) im Bereich des Rotors (09) ausbildet, wobei der Schlitten (18) entlang der Ausgleichsrichtung mittels eines elastischer Vorspannmittel auf den Rotor (09) zu vorgespannt ist.

6. Rollenpumpe nach Anspruch 5,
**gekennzeichnet durch**
einen Anschlag im Gehäuse (02), der die Linearbewegung des Schlittens (18) entgegen der Vorspannung limitiert und/oder einen Mindestabstand (23) im Bereich der Schlauchführung (12) definiert.

7. Rollenpumpe nach Anspruch 5 oder 6,
**gekennzeichnet durch**
einen Betätigungsmechanismus (08), mit dem der Schlitten (18) entgegen der Vorspannung in Ausgleichsrichtung bewegbar, und bevorzugt arretierbar, ist.

8. Rollenpumpe nach Anspruch 7,
**dadurch gekennzeichnet,**
**dass** ein Deckel (04) des Gehäuses (02) so ausgebildet ist, dass dieser in Abhängigkeit des Zustands des Betätigungsmechanismus (08) in einen Sicherungszustand und einen Freigabezustand überführbar ist.

9. Formschlauch (24) zur Medienführung in einer Rollenpumpe, insbesondere einer Rollenpumpe nach einem der Ansprüche 1 bis 7, für ein Milchmodul für Getränkezubereitungsvorrichtungen, wobei der Formschlauch (24) aus flexiblem Material gefertigt ist ein Leitungsvolumen umschließt,
**dadurch gekennzeichnet,**
**dass** der Formschlauch (24) auf einer Außenoberfläche (25) Sicherungsvorsprünge (14, 15) aufweist, die in komplementär ausgebildete Entlastungsaufweitungen (13) des Gehäuses (02) der Rollenpumpe eingreifen können und im eingesetzten Zustand ein Zug- und/oder Druckentlastung des als Fluidschlauch (07) wirkenden Formschlauchs (24) bewirken.

10. Formschlauch nach Anspruch 9,
**dadurch gekennzeichnet,**
**dass** der Formschlauch (24) Mittel aufweist, die eine Wirbelkammer (16) zum Aufschäumen und/oder Erwärmen des im Formschlauch (24) geführten Fluids, bevorzugt der Milch, ausbilden oder im eingesetzten Zustand zusammen mit Mitteln der Rollenpumpe eine Wirbelkammer (16) ausbilden.

11. Formschlauch nach Anspruch 9 oder 10,
**dadurch gekennzeichnet,**
**dass** der Formschlauch (24) samt der Sicherungsvorsprüngen (14, 15) einstückig ausgebildet ist.

12. Milchmodul für Getränkezubereitungsvorrichtungen mit einer Rollenpumpe nach einem der Ansprüche 1 bis 7 und einem darin eingesetzten Formschlauch (24) nach einem der Ansprüche 9 bis 11.
